# EUROPÄISCHE PATENTSCHRIFT

(11) **EP 0 342 148 B1**
(45) Veröffentlichungstag und Bekanntmachung des Hinweises auf die Patenterteilung: **04.08.1993**
(21) Anmeldenummer: 89730110.7
(22) Anmeldetag: 27.04.1989
(51) Int. Cl.: F27B 1/22, F27B 19/00, F27D 15/02, F28D 17/02

(54) **Verfahren und Vorrichtung zur thermischen Behandlung von Feststoffen**
Process and installation for the thermal treatment of solids
Procédé et dispositif pour le traitement thermique de solides

(30) Priorität: 09.05.1988 DE 3816492
(43) Veröffentlichungstag der Anmeldung: 15.11.1989
(73) Patentinhaber: Michel-Kim, Herwig, D-10779 Berlin (DE)
(72) Erfinder: Michel-Kim, Herwig, D-10779 Berlin (DE)
(74) Vertreter: Pfenning, Meinig & Partner

(56) Entgegenhaltungen:
- DE-B- 1 154 238
- DE-C- 59 234
- DE-C- 320 439
- DE-C- 601 795
- FR-A- 2 261 342
- US-A- 2 544 091
- US-A- 2 959 629

## Beschreibung

Die Erfindung betrifft ein Verfahren und eine Vorrichtung zur thermischen Behandlung von Feststoffen in oxidierender bzw. reduzierender Umgebung, bei denen der Feststoff in einem Ofen mit heißen oxidierenden bzw. reduzierenden Gasen der thermischen Hauptbehandlung unterzogen werden, nach dem Oberbegriff des Anspruchs 1 und des nebengeordneten Anspruchs 9.

Für das Brennen von Keramiken, Kalk, Zement, schadstoffhaltigen Schlämmen und kontaminierten Gesteinen oder für die Reduktion von Metallhydroxidschlämmen oder Metallhydroxidpellets werden die verschiedensten Ofenbauarten angeboten. Wenn beim Brennvorgang Schadgase entweichen, müssen die Brenngase so geführt werden, daß eine gute Nachverbrennung gewährleistet ist. Um Schadgase möglichst gut zu verbrennen, ist ein hoher Luftüberschuß notwendig. Eine sichere Nachverbrennung der Schadgase, insbesondere bei hohem Luftüberschuß, erfordert somit sehr viel Energie.

Aus der DE-A-1 154 238 ist ein Verfahren zum Schmelzen von Metallen, Verhütten von Erzen od. dgl. und ein Schachtofen zur Durchführung des Verfahrens offenbart, bei dem eine Schmelzwanne mit zwei Schächten verbunden ist. Das Schmelzgut wird von oben in die Schächte eingegeben und gleichzeitig wird Verbrennungsluft von oben in einen Schacht zugeführt. Im unteren Bereich des Schachtes wird Brennstoff eingedüst, das Schmelzgut wird in der Schmelzwanne geschmolzen und die Abgase treten aus dem anderen Schacht aus, nachdem sie diesen durchströmt haben und ihre Wärme an das Schmelzgut abgegeben haben. In kurzen Intervallen werden die Funktionen der Schächte vertauscht, d.h. die Verbrennungsluft wird von oben in den Schacht, der vorher von unten nach oben mit dem Abgas durchströmt wurde, eingegeben und der andere Schacht wird als Abgasschacht verwendet, wobei dessen Füllung aufgeheizt wird. Die zyklische Umschaltung erfolgt, sobald die Temperatur der aus einem Schacht mit aufzuheizender Füllung oben ausströmenden Abgase einen bestimmten Wert überschreitet.

Der Erfindung liegt die Aufgabe zugrunde, ein Verfahren und eine Vorrichtung zur thermischen Behandlung von Feststoffen zu schaffen, bei denen die Schadstoffe bei hohem Luftüberschuß und verhältnismäßig niedrigen Brenntemperaturen vollständig verbrannt werden, wobei der Energieverbrauch für die thermische Behandlung minimiert werden soll.

Diese Aufgabe wird erfindungsgemäß durch die kennzeichnenden Merkmale des Hauptanspruchs und des nebengeordneten Vorrichtungsanspruchs gelöst.

Dadurch, daß die thermisch zu behandelnden Feststoffe direkt in einen Ofen eingegeben werden, und dort einer thermischen Hauptbehandlung unterzogen werden, bevor sie als zwei Teilströme in zwei mit dem Ofen verbundenen Regeneratoren gefördert werden, wobei oxidierende bzw. reduzierende Gase in den einen Regenerator eingeleitet werden und an den der thermischen Hauptbehandlung unterzogenen Feststoffen als Austauschmedium erhitzt werden und wobei die aus dem Ofen austretenden Abgase ihre Wärme an die Feststoffe des anderen Regenerators wieder abgeben, wird eine sehr gute Wärmerückführung gewährleistet, die weiterhin durch die abwechselnde Zuführung von oxidierenden bzw. reduzierenden Gasen in die zwei Regeneratoren verbessert wird und die aus den jeweiligen Regeneratoren austretenden Abgase frei von Schadstoffen sind. Durch die optimale Wärmeregenerierung wird der Energiebedarf stark verringert, und es kann bei sehr hohem Luftüberschuß gearbeitet werden, ohne daß der Energiebedarf zunimmt. Hierdurch ist es möglich, Tone mit hohem organischem Gehalt oder Schlämme mit Schadstoffgehalt zu brennen. Die bei der thermischen Hauptbehandlung im Ofen austretenden Schadgase werden an den großen Kontaktoberflächen verbrannt, so daß das Abgas frei von Schadgasen ist. Weiterhin ist die Verbackungsgefahr der der thermischen Hauptbehandlung unterzogenen Feststoffe relativ gering, da auf der heißesten Zone im jeweiligen Generator keine hohe Schüttung lastet. Durch die mögliche Reduktion von Metalloxiden können metallhaltige Schlämme bei geringem Energieverbrauch recycelt werden.

Durch die in den Unteransprüchen angegebenen Maßnahmen sind vorteilhafte Weiterbildungen und Verbesserungen möglich. Ausführungsbeispiele der Erfindung sind in der Zeichnung dargestellt und werden in der nachfolgenden Beschreibung näher erläutert. Es zeigen:
- Fig. 1: ein erstes Ausführungsbeispiel der erfindungsgemäßen Vorrichtung mit einem Schneckenrohrofen,
- Fig. 2: ein zweites Ausführungsbeispiel mit einem Schubbodenofen,
- Fig. 3: ein drittes Ausführungsbeispiel mit Drehrohröfen, und
- Fig. 4: ein viertes Ausführungsbeispiel mit Doppel-Tunnelöfen.

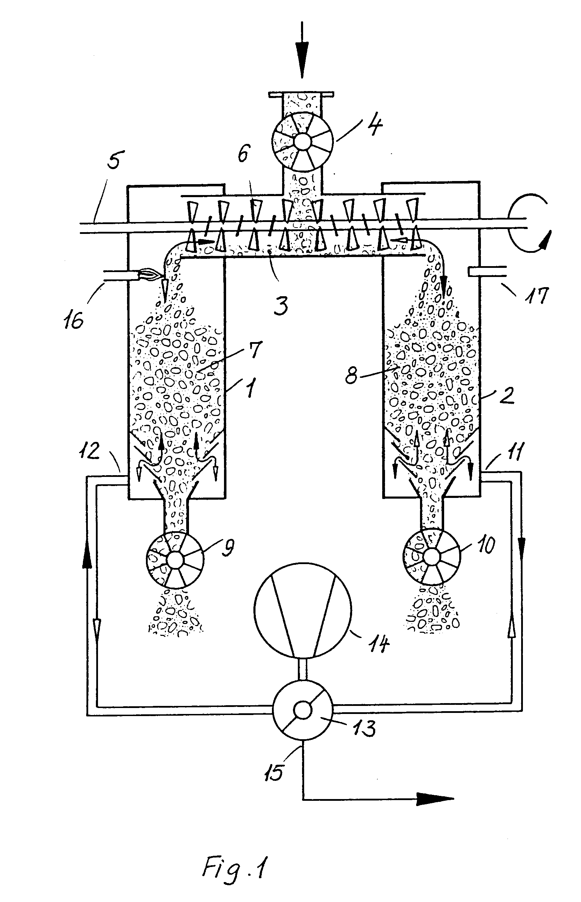

Die Vorrichtung nach Fig. 1 weist zwei als Schachtreaktoren ausgebildete Regeneratoren 1, 2 auf, die an ihrem oberen Ende über einen Schneckenrohrofen 3 miteinander verbunden sind. Etwa in der Mitte des Schneckenrohrofens 3 ist ein Einfüllstutzen mit Schleuse 4 angeordnet, über die die zu behandelnden Feststoffe eingefüllt werden.

Innerhalb des Schneckenrohrofens 3 ist eine drehbare Schnecke 5 mit Schneckenflügeln 6 angeordnet. Innerhalb der Regeneratoren 1, 2 befindet sich jeweils eine als Wanderbett ausgebildete Schüttung 7, 8, die zur Wärmeregenerierung dient, wobei am Boden der Regeneratoren 1, 2 als Schleusen ausgebildete Austragvorrichtungen 9, 10 vorgesehen sind. Weiterhin sind in der Nähe des Bodens der Regeneratoren 1, 2 schematisch angedeutete Gaszufuhr- bzw. -abfuhrleitungen 11, 12, die zu einem Vierwegehahn 13 führen, der mit einem Gebläse 14 verbunden ist und außerdem einen Abgasauslaß 15 aufweist, vorgesehen. Im oberen Bereich der Regeneratoren oberhalb der Schüttungen 7,8 sind seitlich Brenner 16, 17 angeordnet.

Der Feststoff, beispielsweise Steine oder Pellets, wird über die Schleuse 4 in die Mitte des Schneckenrohrofens 3 eingegeben und in diesem Ofen erhitzt. Die Schneckenflügel 6 der Schnecke 5 sind derart angeordnet, daß sie den Feststoff in etwa gleichen Teilmengen aus der Mitte an die beiden Enden der Schnecke 5 fördern und gleichzeitig durchmischen. Dabei erfolgt der Hauptbrennvorgang mit der Freisetzung möglicher Schadgase. Der weitgehend gebrannte Feststoff fällt in die beiden Regeneratoren 1, 2 und bilden dort die Regenerierschüttung 7, 8. In den Mengen, in denen die gebrannten Feststoffe in die Regeneratoren 1, 2 eintreten, werden abgekühlte Feststoffe am Boden über die Austragvorrichtungen 9, 10 ausgetragen.

Die für den Brennvorgang benötigte Verbrennungsluft wird über eine der Leitungen 11, 12 in einen der Regeneratoren 1, 2 eingeleitet, die von dem Gebläse über den Vierwegehahn geliefert wird. Die Luft strömt beispielsweise durch das Wanderbett 7 des Regenerators 1, was durch die schwaren Pfeile angedeutet ist,und erwärmt sich an den Feststoffen des Wanderbettes 7. Bei Austritt aus dem Wanderbett 7 hat die Luft weitgehend die Temperatur der austretenden Gase erreicht. Die Luft wird weiter über den Brenner 16 soweit erhitzt, daß im Schneckenrohrofen 2 der Brand des Feststoffes erfolgen kann. Die Verbrennungsgase können nach Austritt aus dem Schneckenrohrofen 3 nur durch die Schüttung 2 des Regenerators 8 entweichen, wobei sie den größten Teil ihrer Wärme an die Schüttung 8 abgeben. Die am Boden des Regenerators 2 austretenden Gase entweichen durch den Vierwegehahn 13 und den Auslaß 15 und können durch ein zusätzliches Gebläse abgesaugt werden. Nach einer gewissen Taktzeit, beispielsweise nach ca. 60 Sekunden, wird der Vierwegehahn 13 umgestellt und die Luft strömt nun durch die vorher erwärmte Schüttung 8 des Regenerators 2, die dadurch wieder gekühlt wird. Der Brenner 17 übernimmt nun die zusätzliche Erhitzung der Luft auf die für den Brand notwendige Temperatur. Für das wechselseitige Umschalten der Luftzufuhr in den jeweiligen Regenerator 1, 2 können feste Taktzeiten eingestellt werden. Es kann aber auch eine Steuereinheit vorgesehen sein, die den Vierwegehahn umschaltet. Dabei wird die Temperatur des aus dem Boden des jeweiligen Regenerators 1, 2 austretenden Gases gemessen, wobei die Umschaltung dann stattfindet, wenn die Temperatur der austretenden Gase unter einem bestimmten vorgegebenen Wert fällt.

Wenn im zu brennenden Feststoff brennbare Bestandteile enthalten sind, kann die Zufuhr an Brennstoff durch die Brenner 16, 17 gemäß dem Anteil der brennbaren Bestandteile verringert werden. Falls im Brenngut mehr brennbare Bestandteile enthalten sind als zum Brennen benötigt werden, könnte es zu einer Überhitzung kommen. In diesem Fall wird eine Kühlung vorgenommen, die durch eingebaute Wärmetauscher oder durch Einspritzen von Wasser realisiert wird.

In der Vorrichtung nach Fig. 1 kann als Feststoff auch metallhaltige Pellets eingeführt werden, die in dem Schneckenrohrofen 3 reduziert werden. Dann wird anstelle der Luft CO und H₂-haltiges Generatorgas in den Bodenbereich der Regeneratoren 1, 2 eingeführt, das durch die Schüttungen 7,8 der Regeneratoren vorerhitzt wird. Anstelle von Brennstoff wird dann vorerhitzte Luft eingeblasen, die zu einer teilweisen Verbrennung des Generatorgases führt und die Reaktionswärme bereitstellt.

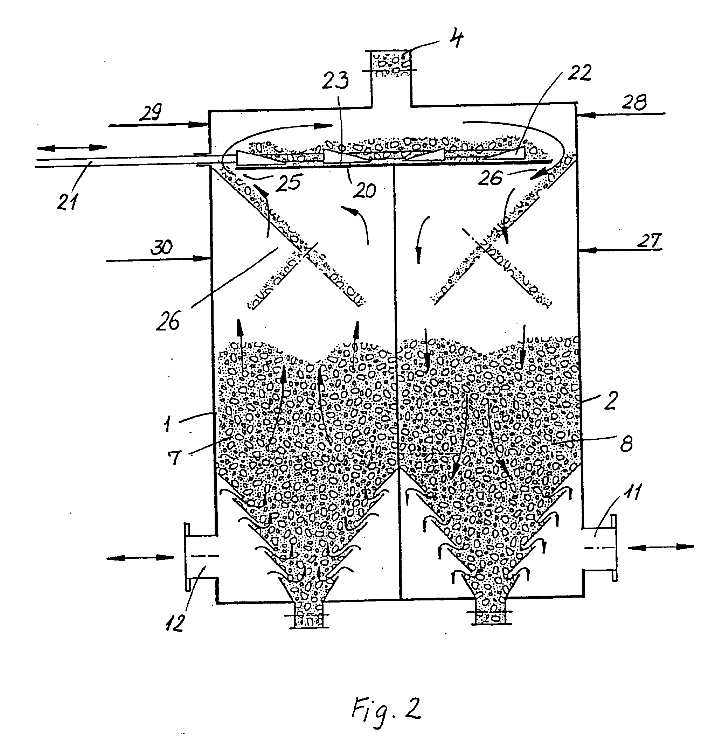

In Fig. 2 ist ein weiteres Ausführungsbeispiel der Vorrichtung zur thermischen Behandlung von Feststoffen dargestellt, bei der ein Schubbodenofen verwendet wird. Dabei werden für gleiche Teile gleiche Bezugszeichen verwandt. Die Feststoffe werden ebenfalls über eine Schleuse 4 auf die Mitte einer Plattform 20 geschüttet, auf der sich ein Schubboden 21 mit unterschiedlich gerichteten Schubkeilen 22, 23 befindet. Durch die Bewegung des Schubbodens 21 werden die zu brennenden Feststoffe durchmischt und nach und nach zu den beiden Enden 24, 25 bewegt, von denen sie in die beiden Regeneratoren 1, 2 fallen. Zur gleichmäßigen Verteilung der gebrannten Feststoffe in den Regeneratoren 1, 2 sind Verteilrinnen 26 angebracht. Die Wärmeregenerierung erfolgt entsprechend dem Ausführungsbeispiel nach Fig. 1. Um eine gleichmäßigere Erhitzung der vorerwämten Verbrennungsluft bzw. des vorerwärmten reduzierenden Gases zu erreichen, sind an mehreren unterschiedlichen Stellen Brenner 27, 28, 29, 30 bzw. Düsen zur Zuführung von Luft vorgesehen.

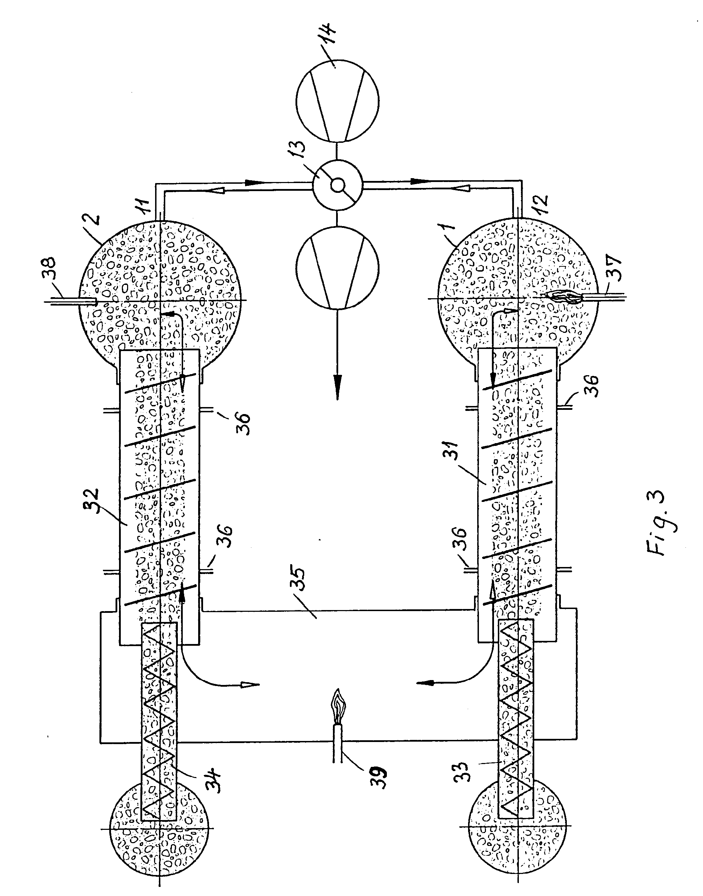

In Fig. 3 ist ein weiteres Ausführungsbeispiel in einer Aufsicht der Vorrichtung zur thermischen Behandlung von Feststoffen gezeigt, bei der zwei Drehrohröfen 31, 32 verwendet werden. Die zu brennenden Feststoffe werden über zwei Zuführvorrichtungen 33, 34 gleichmäßig in die zwei Drehrohröfen 31, 32 eingespeist. Die Drehrohröfen 31, 32 sind über einen Heißgaskanal 35 miteinander verbunden und gegenüber dem Heißgaskanal 35 sowie gegen die Regeneratoren 1, 2 über Dichtungsmanschetten 36 beweglich abgedichtet. Durch die Drehung der Drehrohröfen 31, 32 werden die Feststoffe zu den Regeneratoren 1, 2 befördert. Die Brenner 37, 38 sind hinter den Drehrohröfen 31, 32 vor den Regeneratoren 1, 2 angeordnet, es kann aber auch ein Brenner 39 im Heißgaskanal 35 vorgesehen sein, wobei die Brenner 37, 38, 39 alternierend betätigt werden. Die Wärmeregenerierung wird entsprechend dem Ausführungsbeispiel nach Fig. 1 durchgeführt.

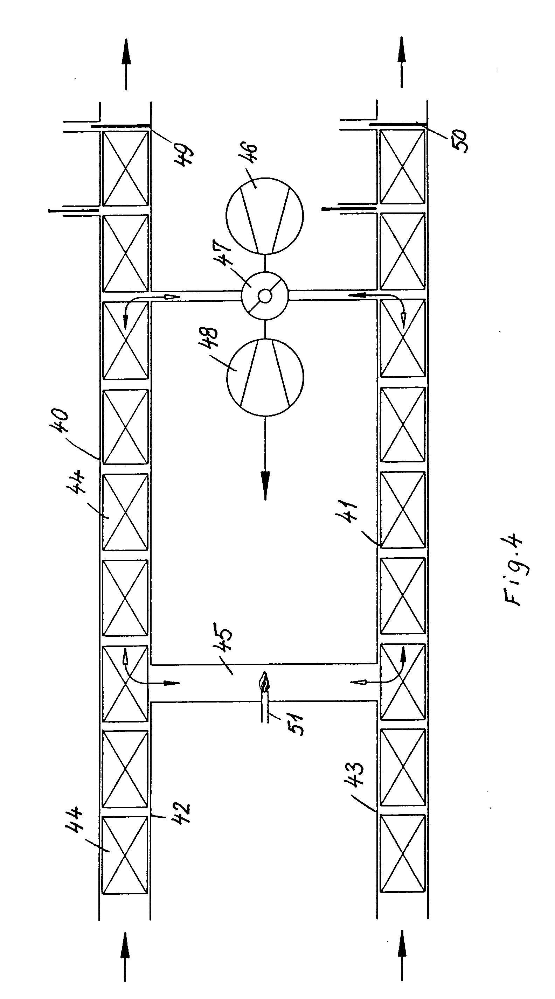

Fig. 4 zeigt ein Ausführungsbeispiel mit zwei Tunnelöfen 40, 41, die insbesondere zum Brennen von Keramiken geeignet sind. Bei der in der Aufsicht dargestellten Vorrichtung sind die Tunnelöfen 40, 41 mit Zuführtunneln 42, 43 verbunden, wobei die zu brennenden Feststoffe auf Tunnelwagen 44 über die Zuführtunnel 42, 43 langsam durch die Tunnelöfen 40, 41 transportiert werden. Hinter den Zuführtunneln 42, 43 sind die Tunnelöfen 40, 41 über einen Heißgaskanal 45 miteinander verbunden. Die Luftzufuhr bzw. die Zufuhr der reduzierenden Gase entspricht den Anordnungen nach den Fig. 1 bis 3, d.h. die Verbrennungsluft bzw. die reduzierenden Gase werden mit einem Gebläse 46 über einen Vierwegehahn 47 wechselseitig in die Tunnelöfen 40, 41 eingeführt und das Abgas wird über ein zweites Gebläse 48 abgesaugt. Am Ende der Tunnelöfen 40, 41 sind Schleusenkammern 49, 50 vorgesehen, über die die gebrannten und in der Tunnelstrecke abgekühlten Feststoffe ausgelassen werden. Die Schleusenkammern 49, 50 sind notwendig, da vor ihnen ein Überdruck bzw. Unterdruck herrscht. In den Zuführtunneln 42, 43 können ebenfalls Schleusen vorgesehen sein. Die Gebläseleistung der beiden Gebläse 46, 48 kann aber so aufeinander abgestimmt sein, daß im Heißgaskanal 45, der die beiden Tunnelöfen 40, 41 verbindet, ungefähr der gleiche Druck wie in der Umgebung herrscht, so daß keine Schleusen notwendig sind und durch die offenen Zuführtunnel 42, 43 keine Fehlluft eingesaugt oder Brenngase entweichen können. Zur Verhinderung des Austritts von Brenngasen ist es sogar besser, einen geringen Unterdruck gegenüber der Umgebung einzustellen, so daß eine kleine Menge Frischluft durch die Tunnelöffnungen eingesaugt wird.

Die über den Vierwegehahn 47 zugeführte Verbrennungsluft erwärmt sich an den gebrannten Feststoffen auf den beladenen Tunnelwagen 44,die sich langsam zu den Schleusen 49, 50 bewegen. Am Ende des jeweiligen Tunnelofens 40 werden sie durch den Brenner 51 im Heißgaskanal 45 weiter erhitzt, so daß die auf den Tunnelwagen 44 vorhandenen Feststoffe gebrannt werden können. Die Verbrennungsgase kühlen sich dann an den Feststoffen im jeweils anderen Tunnelofen ab. Somit entspricht die Wärmeregenerierung derjenigen aus den vorhergehenden Ausführungsbeispielen, wobei anstelle der Schüttung die beladenen Tunnelwagen durch die die Regeneratoren bildenden Tunnelöfen 40, 41 geführt werden. Die Tunnelwagen 44 sind dabei so beladen, daß die Feststoffe gleichmäßig durchströmt werden.

## Patentansprüche

1. Verfahren zur thermischen Behandlung von Feststoffen in oxidierender bzw. reduzierender Umgebung unter Verwendung von Regeneratoren und eines Ofens, bei dem die oxidierenden bzw. reduzierenden Gase wechselseitig in die Regeneratoren eingeleitet und für eine thermische Hauptbehandlung der Feststoffe und nach Durchströmen durch Ofen und Regeneratoren als Abgase wieder ausgelassen werden, wobei die Strömungsrichtung der eingelassenen oxidierenden bzw. reduzierenden Gase taktweise umgeschaltet wird,
**dadurch gekennzeichnet,** daß die Feststoffe in den heißen Ofenbereich eingegeben werden, der thermischen Hauptbehandlung unterzogen und nach der thermischen Hauptbehandlung in zwei Teilmengen in die Regeneratoren gefördert werden, wobei abgekühlter thermisch behandelter Feststoff aus den Regeneratoren abgezogen wird und daß die wechselseitig in die Regeneratoren eingeleiteten oxidierenden bzw. reduzierenden Gase an den der thermischen Hauptbehandlung unterzogenen Feststoffen erwärmt werden.

2. Verfahren nach Anspruch 1, dadurch gekennzeichnet, daß die Feststoffe die Regeneratoren in einem Wanderbett kontinuierlich durchlaufen.

3. Verfahren nach Anspruch 1, dadurch gekennzeichnet, daß die Feststoffe die Regeneratoren in mehreren Teilmengen durchlaufen.

4. Verfahren nach einem der Ansprüche 1 bis 3, dadurch gekennzeichnet, daß die Temperatur der aus dem jeweiligen Regenerator austretenden Gase gemessen wird und abhängig von dieser Temperatur die wechselseitige Einleitung der Verbrennungsluft bzw. der reduzierenden Gase gesteuert wird.

5. Verfahren nach einem der Ansprüche 1 bis 4, dadurch gekennzeichnet, daß die Feststoffe pelletisiert sind und Metalloxide enthalten, wobei das in dem jeweiligen Regenerator erwärmte, als Generatorgas ausgebildete eingeleitete reduzierende Gas mit unterstöchiometrischem Luftdurchsatz auf eine für die Reduktion notwendige Temperatur weitererhitzt werden.

6. Verfahren nach einem der Ansprüche 1 bis 4, dadurch gekennzeichnet, daß die Feststoffe mit oxidierenden Verbrennungsgasen gebrannt werden, wobei die in dem jeweiligen Regenerator erwärmte eingeleitete Verbrennungsluft mit Brennstoffzusatz auf eine für den Brand notwendige Temperatur weitererhitzt werden.

7. Verfahren nach Anspruch 5 oder 6, dadurch gekennzeichnet, daß die für die Reduktion notwendige Luft bzw. der für den Brand notwendige Brennstoff zur Erzielung einer gleichmäßigen Erhitzung an mehreren unterschiedlichen Stellen zugeführt wird.

8. Verfahren nach einem der Ansprüche 5 bis 7, dadurch gekennzeichnet, daß der Zusatz von Luft bzw. Brennstoff abhängig von der Zufuhr von Verbrennungsluft bzw. reduzierenden Gasen in den jeweiligen Regenerator wechselseitig gesteuert wird.

9. Vorrichtung zur thermischen Behandlung von Feststoffen in oxidierender bzw. reduzierender Umgebung nach Anspruch 1 mit einem Ofen, in dem eine thermische Hauptbehandlung der Feststoffe durchgeführt wird und zwei mit dem Ofen verbundene Regeneratoren, in die über an zu dem Ofen entgegengesetzten Enden der Regeneratoren angeordnete Zu- bzw. Ableitungen wechselseltig oxidierende bzw. reduzierende Gase eingeleitet, für die thermische Hauptbehandlung im Ofen verwendet und nach Durchströmen durch Ofen und Regeneratoren als Abgase ausgelassen werden,
**dadurch gekennzeichnet,** daß der Ofen (3;31,32;40,41) eine Zuführvorrichtung (4) zum Zuführen der Feststoffe direkt in den Ofen und eine Fördervorrichtung (6,22) aufweist, die die der thermischen Hauptbehandlung unterzogenen Feststoffe in zwei Teilströmen in die Regeneratoren (1,2;40,41) fördert und daß jeder Regenerator (1,2;40,41) mit seinem dem Ofen entgegengesetzten Ende an eine Austragvorrichtung (9,10) für den thermisch behandelten Feststoff angeschlossen ist.

10. Vorrichtung nach Anspruch 9, dadurch gekennzeichnet, daß ein Vierwegeventil (13,45) vorgesehen ist, über das die oxidierenden bzw. reduzierenden Gase zuführbar und die aus den Regeneratoren (1,2;40,41) austretenden Abgase abführbar sind.

11. Vorrichtung nach Anspruch 9 oder 10, dadurch gekennzeichnet, daß die Zuführvorrichtung (4) für die Feststoffe in der Mitte des die Regeneratoren verbindenden Ofens angeordnet ist und daß die Regeneratoren (1,2) als Schachtreaktoren ausgebildet sind, wobei die Austragvorrichtung (9,10) für die ein Wanderbett bildenden, der thermischen Hauptbehandlung unterzogenen Feststoffe am Boden jedes Schachtreaktors angeordnet ist.

12. Vorrichtung nach Anspruch 11, dadurch gekennzeichnet, daß der die Regeneratoren (1,2) verbindende Ofen als Schneckenrohrreaktor (3) ausgebildet ist, wobei die sich drehenden Schneckenflügel die Fördervorrichtung bilden.

13. Vorrichtung nach Anspruch 11, dadurch gekennzeichnet, daß der die Regeneratoren (1,2) verbindende Ofen als Schubbodenreaktor (21) ausgebildet ist, wobei bewegte Schubkeile die Förderung der Feststoffe zu den Regeneratoren vornehmen.

14. Vorrichtung nach Anspruch 13, dadurch gekennzeichnet, daß unterhalb des Schubbodenreaktors (21) Verteilerrinnen (26) zur gleichmäßigen Verteilung der Feststoffe in den Regeneratoren (1,2)vorgesehen sind.

15. Vorrichtung nach einem der Ansprüche 9 bis 11, dadurch gekennzeichnet, daß der die Regeneratoren (1,2) verbindende Ofen aus einem doppelten Drehrohrofen (31,32) mit einem Verbindungskanal (35) zwischen den Drehrohröfen (31,32) besteht, wobei jeder Drehrohrofen (31,32) eine Zuführvorrichtung (33,34) aufweist und daß während der thermischen Hauptbehandlung durch Fördervorrichtungen in den Drehrohröfen die Feststoffe zu etwa gleichen Teilen in die beiden Regeneratoren förderbar sind.

16. Vorrichtung nach Anspruch 8 oder 9, dadurch gekennzeichnet, daß die Regeneratoren als parallele Tunnelöfen (40,41) ausgebildet sind und der die Regeneratoren (40,41) verbindende Ofen aus Teilbereichen der Tunnelöfen (40,41) besteht, zwischen denen ein Verbindungskanal (45) vorgesehen ist.

17. Vorrichtung nach Anspruch 16, dadurch gekennzeichnet, daß zur Zufuhr der Verbrennungsluft und zur Absaugung der Abgase Gebläse (46,48) vorgesehen sind, deren Leistungen derart aufeinander abgestimmt sind, daß im Verbindungskanal (45) in etwa der gleiche Druck wie in der Umgebung herrscht.

18. Vorrichtung nach Anspruch 17, dadurch gekennzeichnet, daß die Gebläseleistungen der beiden Gebläse (46,48) derart aufeinander abgestimmt sind, daß ein geringer Unterdruck gegenüber der Umgebung in dem Verbindungskanal (45) vorgesehen ist.

## Claims

1. Process for the thermal treatment of solids in an oxidising or reducing environment using regenerators and a kiln in which process the oxidising or reducing gases are fed alternately into the regenerators and are then discharged for a main thermal treatment of the solids and after flowing through kiln and regenerators in the form of exhaust gases, the direction of flow of the admitted oxidising or reducing gases being reversed in a fixed cycle,
**characterised in that**
the solids are fed into the hot kiln area, undergo main thermal treatment and after main thermal treatment are conveyed in two parts, cooled thermally treated solid being drawn out of the regenerators and that the oxidising or reducing gases fed alternately into the regenerators are heated using the solids having undergone main thermal treatment.

2. Process according to Claim 1 characterised in that the solids flow continually in a travelling bed through the regenerators.

3. Process according to Claim 1 characterised in that the solids flow through the regenerators in several lots.

4. Process according to one of Claims 1 to 3 characterised in that the temperature of the gases coming out of the respective regenerator is measured and the alternate supply of combustion air or of the reducing gases is controlled depending on this temperature.

5. Process according to one of Claims 1 to 4 characterised in that the solids are pelletised and contain metal oxides, the gas heated in the respective regenerator and in the form of generator gas being re-heated using sub-stoechiometric air flow to a temperature required for reduction.

6. Process according to one of Claims 1 to 4 characterised in that the solids are burned with oxidising combustion gases, the supplied combustion air heated in the respective regenerator being re-heated using fuel additive to a temperature necessary for combustion.

7. Process according to Claim 5 to 6 characterised in that the air required for reduction or the fuel necessary for combustion is supplied to several various points in order to achieve uniform heating.

8. Process according to one of Claims 5 to 7 characterised in that the addition of air of fuel is alternatively controlled in the respective regenerator depending on the supply of combustion air or reducing gases.

9. Device for the thermal treament of solids in an oxidising or reducing environment according to Claim 1 with a kiln in which the solids undergo a main thermal treatment and two regenerators, connected to the kiln in which oxidising or reducing gases are supplied alternately to in- or outlets arranged on the ends of the regenerators opposite the kiln, are used for main thermal treatment in the kiln and after flowing through kiln and regenerators are discharged as exhaust gases,
**characterised in that**
the kiln (3;31,32;40,41) has a supply device (4) for supplying the solids directly into the kiln and a transport device (6,22), which transports the solids that have undergone main thermal treatment in two parts into the regenerators (1,2;40,41) and that each regenerator (1,2;40,41) is connected with its end opposite the kiln to a discharge device (9,10) for the thermally treated solid.

10. Device according to Claim 9 characterised in that a four-way valve (13,45) is provided through which the oxidising or reducing gases can be supplied and the exhaust gases coming from the regenerators (1,2;40,41) can be discharged.

11. Device according to Claim 9 or 10 characterised in that the supply device (4) for the solids is arranged in the middle of the kiln connecting the regenerators and that the regenerators (1,2) are designed as shaft reactors, the discharge device (9,10) for the solids forming a travelling bed and having undergone thermal main treatment is arranged at the base of each shaft reactor.

12. Device according to Claim 11 characterised in that the kiln connecting the regenerators (1,2) is designed as a spiral tube reactor (3), the spiral blades forming the transport device.

13. Device according to Claim 11 characterised in that the kiln connecting the regenerators (1,2) is designed as a sliding floor reactor (21), propelled sliding blocks transporting the solids to the regenerators.

14. Device according to Claim 13 characterised in that distribution troughs (26) are provided beneath the sliding floor reactor (21) to evenly distribute the solids in the regenerators (1,2).

15. Device according to one of the claims 9 to 11 characterised in that the kiln connecting the regenerators (1,2) consists of a double rotating tubular kiln (31,32) with a connecting channel (35) between the double rotating tubular kiln (31,32), each double rotating tubular kiln (31,32) having a supply device (33,34) and that during main thermal treatment the solids can be transported via transport devices in the double rotating tubular kilns in approximately equal quantities to the two regenerators.

16. Device according to Claim 8 or 9 characterised in that the regenerators are designed as parallel tunnel kilns (40,41) and the kiln connecting the regenerators (40,41) consists of part-areas of the tunnel kilns (40,41) between which a connecting channel (45) is provided.

17. Device according to Claim 16 characterised in that exhaust fans (46,48) are provided for the supply of the combustion air and the removal of the exhaust gases, the duty of which exhaust fans is matched to the other so that approximately the same pressure as in the environment prevails in the connecting channel (45).

18. Device according to Claim 17 characterised in that the exhaust duties of the two exhaust fans (46,48) are matched such that a low negative pressure is provided in the connecting channel (45) compared with the environment.

## Revendications

1. Procédé de traitement thermique de solides dans un milieu oxydant ou réducteur, par l'utilisation de régénérateurs et d'un four, dans lequel les gaz oxydants et respectivement réducteurs sont réciproquement introduits dans les régénérateurs et évacués à nouveau sous la forme de gaz résiduaires pour un traitement principal thermique des substances solides et après passage à travers le four et les régénérateurs, le sens d'écoulement des gaz oxydants et respectivement réducteurs admis étant commuté de manière cyclique, caractérisé en ce que les substances solides sont introduites dans la zone- très chaude du four, sont soumises au traitement thermique principal et sont, après le traitement thermique principal, transportées en deux quantités partielles dans les régénérateurs, une substance solide thermiquement traitée, refroidie, étant prélevée des régénérateurs, et en ce que les gaz oxydants et respectivement réducteurs introduits réciproquement dans les régénérateurs sont chauffés sur les substances solides soumises au traitement thermique principal.

2. Procédé suivant la revendication 1, caractérisé en ce que les substances solides traversent les régénérateurs d'une manière continue dans un lit migrant.

3. Procédé suivant la revendication 1, caractérisé en ce que les substances solides traversent les régénérateurs en plusieurs quantités partielles.

4. Procédé suivant l'une des revendications 1 à 3, caractérisé en ce que la température des gaz sortant du régénérateur correspondant est mesurée et en ce que, en fonction de cette température, l'introduction réciproque de l'air de combustion et respectivement des gaz réducteurs est commandée.

5. Procédé suivant l'une des revendications 1 à 4, caractérisé en ce que les substances solides sont agglomérées en boulettes et contiennent des oxydes métalliques, le gaz réducteur introduit, chauffé dans le régénérateur correspondant et réalisé sous la forme d'un gaz de gazogène étant, avec un débit d'air inférieur à la stoechiométrie, chauffé de manière poursuivie à une température nécessaire pour la réduction.

6. Procédé suivant l'une des revendications 1 à 4, caractérisé en ce que les substances solides sont brûlées par des gaz de combustion oxydants, l'air de combustion introduit, chauffé dans le régénérateur correspondant, étant, avec une addition de combustible, chauffé de manière poursuivie à une température nécessaire pour la combustion.

7. Procédé suivant l'une des revendications 5 et 6, caractérisé en ce que l'air nécessaire à la réduction ou respectivement le combustible nécessaire à la combustion est amené en plusieurs endroits différents pour obtenir un chauffage uniforme.

8. Procédé suivant l'une des revendications 5 à 7, caractérisé en ce que l'addition d'air ou respectivement de combustible est commandée de manière réciproque en fonction de l'apport d'air de combustion ou respectivement de gaz réducteurs dans le régénérateur correspondant.

9. Dispositif pour le traitement thermique de substances solides dans un milieu oxydant ou respectivement réducteur suivant la revendication 1, comprenant un four, dans lequel un traitement thermique principal des substances solides est effectué, et deux régénérateurs reliés au four, dans lesquels des gaz oxydants et respectivement réducteurs sont réciproquement introduits par l'intermédiaire de conduits d'entrée et respectivement de sortie agencés aux extrémités des régénérateurs opposées au four, sont utilisés pour le traitement thermique principal dans le four et sont évacués, sous la forme de gaz résiduaires, après passage à travers le four et les régénérateurs, caractérisé en ce que le four (3; 31, 32; 40, 41) présente un dispositif d'alimentation (4) pour amener les substances solides directement dans le four et un dispositif de transport (6, 22) qui achemine les substances solides soumises au traitement thermique principal en deux courants partiels dans les régénérateurs (1, 2; 40, 41), et en ce que chaque régénérateur (1, 2; 40, 41) est raccordé, à son extrémité opposée au four, à un dispositif d'évacuation (9, 10) pour la substance solide thermiquement traitée.

10. Dispositif suivant la revendication 9, caractérisé en ce qu'on prévoit une vanne à quatre voies (13, 45) par laquelle les gaz oxydants et respectivement réducteurs peuvent être amenés et les gaz résiduaires sortant des régénérateurs (1, 2; 40, 41) être évacués.

11. Dispositif suivant l'une des revendications 9 et 10, caractérisé en ce que le dispositif d'alimentation (4) pour les substances solides est agencé au milieu du four reliant les régénérateurs et en ce que les régénérateurs (1, 2) sont réalisés sous la forme de réacteurs en forme de puits, le dispositif d'évacuation (9, 10) pour les substances solides formant un lit migratoire et soumises au traitement thermique principal étant agencé au fond de chaque réacteur en forme de puits.

12. Dispositif suivant la revendication 11, caractérisé en ce que le four reliant les régénérateurs (1, 2) est réalisé sous la forme d'un réacteur tubulaire à vis (3), les pales de la vis en rotation formant le dispositif de transport.

13. Dispositif suivant la revendication 11, caractérisé en ce que le four reliant les régénérateurs (1, 2) est réalisé sous la forme d'un réacteur à fond poussant (21), des coins de poussée déplacés provoquant l'avancement des substances solides vers les régénérateurs.

14. Dispositif suivant la revendication 13, caractérisé en ce que des canaux de répartition (26) sont prévus en dessous du réacteur à fond poussant (21) pour répartir de manière uniforme les substances solides dans les régénérateurs (1, 2).

15. Dispositif suivant l'une des revendications 9 à 11, caractérisé en ce que le four reliant les régénérateurs (1, 2) est constitué d'un double four tubulaire rotatif (31, 32) pourvu d'un canal de liaison (35) entre les fours tubulaires rotatifs (31, 32), chaque four tubulaire rotatif (31, 32) présentant un dispositif d'alimentation (33, 34), et en ce que, pendant le traitement thermique principal, les substances solides peuvent être transportées dans les deux régénérateurs par des dispositifs de transport des fours tubulaires rotatifs, en deux parties approximativement égales.

16. Dispositif suivant l'une des revendications 8 et 9, caractérisé en ce que les régénérateurs sont réalisés sous la forme de fours tunnels (40, 41) parallèles et en ce que le four reliant les régénérateurs (40, 41) est constitué de zones partielles des fours tunnels (40, 41) entre lesquelles un canal de liaison (45) est prévu.

17. Dispositif suivant la revendication 16, caractérisé en ce que, pour l'amenée de l'air de combustion et pour l'aspiration des gaz résiduaires, on prévoit des ventilateurs (46, 48) dont les puissances sont accordées l'une sur l'autre de telle façon qu'il règne dans le canal de liaison (45) approximativement la même pression que dans l'environnement.

18. Dispositif suivant la revendication 17, caractérisé en ce que les puissances des deux ventilateurs (46, 48) sont accordées l'une sur l'autre de telle façon qu'une faible pression réduite par rapport à l'environnement soit prévue dans le canal de liaison (45).
